(19) Europäisches Patentamt
European Patent Office
Office européen des brevets

(11) EP 0 940 421 A2

# (12) EUROPEAN PATENT APPLICATION

(43) Date of publication:
**08.09.1999 Bulletin 1999/36**

(51) Int Cl.[6]: **C08G 77/12**

(21) Application number: **99301652.6**

(22) Date of filing: **05.03.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **06.03.1998 RU 98104144**

(71) Applicants:
- **Dow Corning Corporation**
**Midland, Michigan 48611 (US)**
- **Dow Corning Toray Silicone Company, Ltd.**
**Tokyo, 100 (JP)**

(72) Inventors:
- **Cray, Stephen E.**
**Sully CF64 5TH (GB)**
- **Muzafarov, Aziz**
**Moscow 121614 (RU)**
- **Okawa, Tadashi**
**Ichiharashi, Chiba (JP)**

(74) Representative:
**Vandamme, Luc Johan Roger, Dr.**
**Dow Corning Limited,**
**Patent Department,**
**Cardiff Road**
**Barry, CF63 2YL, Wales (GB)**

## (54) Hyperbranched polymers

(57) A macromonomer of the general formula $A_x$ L $B_y$ in which A is an alkenyl-containing or alkynyl-containing group; B is an SiH-containing group of the formula $-OSiR_2H$; one of *x* and *y* is 1, and the other is 2 or 3; L is a spacer group which includes a polysiloxane moiety of the formula $(R_2SiO)_n$; each R independently is an alkyl, haloalkyl or aryl group; and *n* is an integer of at least 3 is disclosed, as well as a process for making it. Also disclosed is a method of forming a hyperbranched polymer, which comprises contacting a macromonomer according to any of Claims 1 to 10 with a catalyst comprising a Group VIII metal, and the polymers thus obtained.

EP 0 940 421 A2

## Description

This invention relates to hyperbranched polymers and to their preparation by polymerisation of macromonomers. The hyperbranched polymers are polysiloxanes having a SiH containing surface or an alkenyl or alkynyl containing surface. Hyperbranched polymers are a class of very highly branched polymers which tend to be globular in form.

Various types of hyperbranched polymers, which are represented by the Starburst™ dendrimers (treelike polymers), are known. These hyperbranched polymers have a higher functional group density per molecular unit than straight-chain polymers and conventional branched polymers. Another characteristic feature of the hyperbranched polymers is that they possess an internal space once they have been elaborated to several generations. These characteristics point to potential applications as surfactants, gelling agents, drug delivery systems, polymeric absorbents, and the like.

It was considered desirable to introduce siloxane bonds into a hyperbranched polymer format to provide a hyperbranched polymer that possesses some features of polysiloxanes. Various polysiloxane-based hyperbranched polymers have already been proposed. Hyperbranched siloxane polymers with a SiH containing surface or an alkenyl or alkynyl containing surface would be interesting. However, it is difficult to prepare hyperbranched polymers with a SiH surface because of several factors, including the instability of SiH precursors, difficulty in controlling the reaction to prevent crosslinking, and difficulty in preventing side reactions during storage. For example, JP-A 03-263,431 teaches a method for synthesizing a SiH-functional polysiloxane dendrimer by repeating a multi-step reaction that includes condensation of SiCl and SiOH groups and hydrolysis of SiH groups. This method, however, is unsuitable for large-scale industrial production due to its complex synthetic procedure and low overall yield.

In Organometallic News, 40-42 (1993), a method is proposed for the synthesis of a SiH-functional polysiloxane dendrimer by reacting polyfunctional chlorosilane with 1,1,3,3-tetramethyldisiloxane in the presence of hydrochloric acid to replace the chlorine atom of SiCl with the dimethylsiloxy group. Since these synthetic methods are each multi-step reactions with isolation and purification at each step, they offer the advantage of producing dendrimers with defined structures and narrow molecular weight distributions. However, they require repetition of the reaction process a number of times in order to obtain dendrimer of the desired generation and they have low overall yields, and these features make them very unsuitable for large-scale industrial production.

Hyperbranched poly(siloxysilanes) are described by Mathias and Carothers in J. Am. Chem. Soc. 1991, 113, 4043-4044. A monomer of the formula $Vi(CH_2)Si(OSiMe_2H)_3$, where Vi is vinyl and Me is methyl, is polymerised using a platinum hydrosilation catalyst. The resulting hyperbranched polymer with a SiH surface can be stabilised by capping with allylphenylether. In contrast, in J. Inorg. Organomet. Polym. 4(1), 61-77 (1994) a single-step method is proposed for obtaining SiH-functional or Si-vinyl-functional hyperbranched polysiloxane by the intermolecular hydrosilylation reaction of vinyltris (dimethylsiloxy)silane or tris(vinyldimethylsiloxy)silane. This method cannot, however, provide a narrow molecular weight distribution or defined-structure dendrimer. Due to the close proximity of the silicon-bonded hydrogen and vinyl in this method, steric hindrance increases in association with the development of the hydrosilylation reaction to such a degree that bringing the reaction to completion becomes quite problematic. In addition, this method has been unable to bring the properties characteristic of polysiloxanes to the hyperbranched polymer format because it gives polymer that has the silethylenesiloxane structure.

We have found that hyperbranched polymers can be prepared from macromonomers which include a polysiloxane moiety between a terminal alkenyl-containing or alkynyl-containing group or groups and a terminal SiH-containing group or groups. The presence of a siloxane spacer is preferable to the inflexible silane-type material of the prior art.

The present invention thus provides a macromonomer of the general formula $A_x L B_y$ in which

A is an alkenyl-containing or alkynyl-containing group;
B is an SiH-containing group of the formula $-OSiR_2H$; one of x and y is 1, and the other is 2 or 3;
L is a spacer group which includes a polysiloxane moiety of the formula $(R_2SiO)_n$;
each R independently is an alkyl, haloalkyl or aryl group; and
n is an integer of at least 3.

The macromonomer preferably has the general formula:

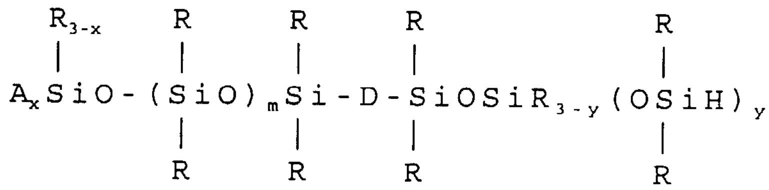

wherein A, R are as defined above; D is selected from the group consisting of an oxygen atom and a divalent hydrocarbon group of at least two carbon atoms and with no aliphatic unsaturation; *m* is an integer with a value greater than or equal to 0; *x* and *y* are 1, 2, or 3 with the provisos that when *x* is 1, *y* is 2 or 3 and when *y* is 1, *x* is 2 or 3.

A preferably represents an aliphatically unsaturated organic group, for example, alkenyl such as vinyl, butenyl, and hexenyl; alkenyloxyalkyl such as allyloxyethyl, methacryloxypropyl, and 4-vinylphenyl. A is preferably a lower alkenyl or alkynyl group containing 2 to 6 carbon atoms. A is more preferably vinyl or allyl, with the proviso that the unsaturation of the allyl group is terminal (i.e. at the free end of the group). Vinyl is particularly preferred due to ease of synthesis and economics.

Each R is for example alkyl such as methyl, ethyl, propyl, butyl, pentyl, or hexyl; aryl such as phenyl, tolyl or xylyl or aralkyl such as benzyl and phenethyl. Monovalent halogenated alkyl or aryl groups are exemplified by trifluoropropyl. R is preferably independently selected from the group consisting of alkyl groups of 1 to 6 carbon atoms, haloalkyl groups of 1 to 6 carbon atoms, and phenyl. Methyl is particularly preferred for R.

D is selected from the group consisting of oxygen and divalent hydrocarbon groups with at least 2 carbon atoms and no aliphatic unsaturation. D is exemplified by ethylene, methylmethylene, propylene, butylene, and hexylene. B is preferably ethylene.

The values of *x* and *y* are such that the macromonomer will have either one aliphatically unsaturated organic group at one molecular chain terminal and 2 or 3 diorganohydrogensiloxy groups at the other molecular chain terminal or vice versa.

The subscript *m* is an integer greater than or equal to 0, preferably from 0 to 1,000, more preferably from 0 to 200, most preferably 1 to 100, and particularly preferably from 10 to 100.

The spacer group L may be solely a polysiloxane group or may be a copolymer of one or more polysiloxane moieties and one or more other chains, such as carbon chains. Preferably the polysiloxane moiety comprises from 10 to 100 siloxane units.

A preferred macromonomer according to the invention is of the general formula:

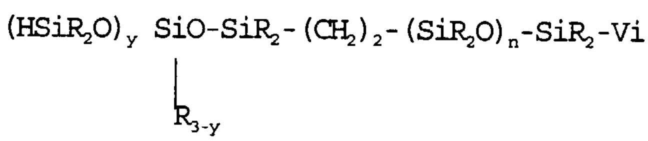

where y is 2 or 3, and Vi is vinyl.

A particularly preferred macromonomer according to the invention is of the formula:

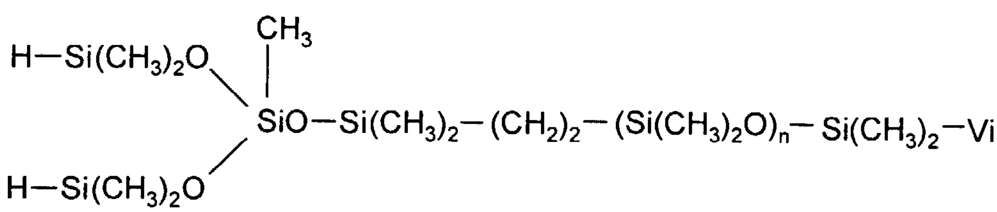

where, *n* is preferably from 10 to 100.

The invention also provides a method of preparing a macromonomer as defined above, which comprises reacting a compound (a) of the formula $A_xL^1P$ with a compound (b) of the formula $QL^2B_y$, in which one of P and Q is a halogen and the other of P and Q is an alkali metal and $L^1$ and $L^2$ are spacer groups, at least one of which includes a polysiloxane moiety of unit formula $R_2SiO$.

In the method of preparing the macromonomer according to the invention, the halogen represented by P or Q is preferably chlorine, and the alkali metal represented by P or Q is preferably lithium. In a preferred embodiment, a compound of the formula:

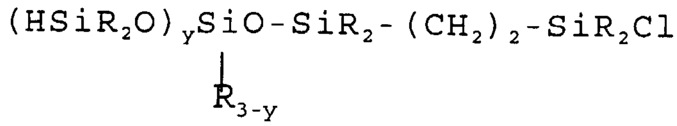

is reacted with Li $(OSiR_2)_n$-Vi.

In a particularly preferred embodiment, *y* = 2 and the compound

$$(HSiR_2O)_2\ Si(R)O\text{-}SiR_2\text{-}(CH_2)_2\text{-}SiR_2Cl$$

is formed by reacting $(HSiR_2O)_3SiR$ with $ViSiR_2Cl$ in the presence of a platinum catalyst.

Preferably, the compound $Li(OSiR_2)_n$-Vi is formed by reacting $ViSiR_2OLi$ with $(R_2SiO)_3$ in proportions predetermined to obtain the desired value of *n*.

The reaction can be run without solvent, but it is preferably run in the presence of a suitable organic solvent. Suitable organic solvents are specifically exemplified by aromatic hydrocarbons such as benzene, toluene, and xylene; aliphatic hydrocarbons such as hexane and heptane; ethers such as tetrahydrofuran and diethyl ether; ketones such as acetone and methyl ethyl ketone; esters such as ethyl acetate and butyl acetate; chlorinated hydrocarbons such as carbon tetrachloride, trichloroethane, and chloroform; as well as dimethylformamide and dimethyl sulfoxide.

The reaction of compounds (a) and (b) will run in the absence of catalyst, but a small amount of an acidic compound such as trifluoroacetic acid, trimethylchlorosilane, or ammonium chloride, can also be added as catalyst to accelerate the reaction rate.

An alternative method for preparing the macromonomer comprises reacting compound (a') which has the general formula

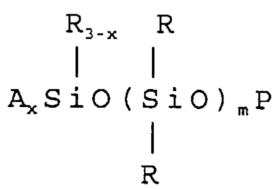

where A, R, P and *m* are as defined above and compound (b'), which has the general formula

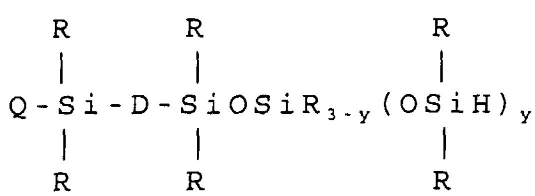

where R, D, Q and *y* are as defined above. For P and Q, the halogen atom is preferably chlorine, and the alkali metal atom is preferably lithium.

The invention further provides a method of forming a hyperbranched polymer, which comprises contacting a macromonomer as defined above with a catalyst comprising a Group VIII metal. The hyperbranched polymer is derived from the macromonomer by a hydrosilation reaction between the alkenyl-containing or alkynyl-containing groups and SiH-containing groups.

The catalyst comprising a Group VIII metal which may be employed in the preparation of the macromonomer, and also in the polymerisation of the macromonomer, is any such catalyst suitable for use in hydrosilation reactions.

Examples of suitable catalysts are ruthenium, rhodium, palladium, osmium, iridium and platinum. Preferably the catalyst is a platinum compound or complex. Suitable platinum compounds and complexes include chloroplatinic acid, platinum acetylacetonate, complexes of platinous halides with unsaturated compounds such as ethylene, propylene, organovinylsiloxanes, and styrene, hexamethyldiplatinum, $PtCl_2$, $PtCl_3$, $PtCl_4$, and $Pt(CN)_3$.

When the hyperbranched polymer has an SiH surface, it can be stabilised by addition of a volatile SiH-containing compound or by extracting platinum-containing compounds using an immiscible nitrogen-containing polar solvent. The volatile SiH-containing compound may be trimethylsilane or tetramethyldisiloxane. The solvent may be tetramethylethylenediamine, polyethylenepolyamine or acetonitrile.

We have found that stable hyperbranched polymer systems can be prepared from the macromonomers according to the invention. To enhance the stability of the hyperbranched polymers, control is preferably effected over catalyst concentration minimisation and reaction mixture dilution. On completion of reaction, the Group VIII metal, e. g. platinum, catalyst is preferably deactivated or a low molecular weight SiH compound is added.

The macromonomers according to the invention can be effectively polymerised with Group VIII metal, e.g. platinum, catalysts. For those macromonomers having a single alkenyl or alkynyl group and two or three SiH groups, 100% conversion of the alkenyl or alkynyl groups can be achieved after several hours. The molecular masses of the reaction products depend on several factors: In particular, the type of macromonomer and the concentration of macromonomer and catalyst in solution. In the case of a relatively small macromonomer, MM-1 in the examples below, experiments with a 50% solution of the macromonomer in n-hexane show full conversion of vinyl groups and 50% conversion of SiH groups, and the molecular mass of the product coincides with the molecular mass of the macromonomer. This can be explained by a cyclisation process only. In bulk, a soluble polymer with a molecular mass range of 15,000 to 30,000 was obtained.

With larger macromonomers (MM-2 and MM-3 in the examples below) reactions in bulk may lead to obtaining crosslinked insoluble products. In the case of polymerisation in solution, both these macromonomers after full conversion of vinyl groups gave soluble polymers. The most probable side reaction, leading to crosslinking, is interaction of functional groups with platinum catalyst with subsequent regrouping. We have found that decreasing the catalyst concentration enables us to obtain fully soluble products at total conversion of vinyl groups.

We have thus been able to synthesise hyperbranched H-functional polydimethylsiloxanes and similar products based on the macromonomers of this invention. The obtained polymers are transparent slow-moving liquids. The intrinsic viscosity of the obtained polymers varies from 0.15 to 0.65 dl/g and molecular masses of from 15,000 to 800,000, depending on the size of the initial macromonomer.

The addition reaction can be run in the absence of solvent or in a suitable organic solvent. Specific examples of organic solvents include aromatic hydrocarbons such as benzene, toluene, and xylene; aliphatic hydrocarbons such as hexane and heptane; ethers such as tetrahydrofuran and diethyl ether; ketones such as acetone and methyl ethyl; esters such as ethyl acetate and butyl acetate; chlorinated hydrocarbons such as carbon tetrachloride, trichloroethane, and chloroform; as well as dimethylformamide and dimethyl sulfoxide. This addition reaction can be run at room temperature, but it is preferably run at 50°C to 200°C.

For macromonomers having a single aliphatically unsaturated group A and two or three SiH groups, 100% conversion of the aliphatically unsaturated groups can be achieved after several hours. The molecular masses of the reaction products depend on several factors, particularly the type of macromonomer and the concentration of macromonomer and catalyst in solution. Macromonomers having a single aliphatically unsaturated group A and two or three SiH groups, will polymerize to form a hyperbranched polymer with an SiH surface.

This invention further relates to a method for stabilizing the hyperbranched polymers. To stabilize the hyperbranched polymers, control is preferably effected over catalyst concentration minimization and reaction mixture dilution. On completion of reaction, the Group VIII metal, e.g. platinum, catalyst is preferably deactivated or a low molecular weight SiH compound is added.

The invention is illustrated by the following Examples:

**EXAMPLE 1**

Hydrogen functional trisiloxymethylsilane was reacted with vinylchlorodimethylsilane in toluene in the presence of a platinum catalyst in accordance with the following equation to produce the intermediate (I):

$$(HSiMe_2O)_3SiMe + ViSiMe_2Cl \rightarrow$$

$$(HSiMe_2O)_2SiMe\text{-}OSiMe_2 - (CH_2)_2SiMe_2Cl \qquad (I)$$

Lithiumvinylsilanoate was reacted with cyclic trisiloxane in a solvent mixture of 96 % toluene and 4% dimethylformamide to form the intermediate (II) in accordance with the following equation:

$$ViSiMe_2OLi + (Me_2SiO)_3 \rightarrow Vi(Me_2SiO)_n\text{-}Li \qquad (II)$$

The value of n in the intermediate (II) is controlled by the ratio of amounts of reagents in this step. The intermediates (I) (103 mmol) and (II) (85 mmol) are then reacted together in 220 g of a mixture of 96% toluene and 4% dimethylformamide with elimination of lithiumchloride over a period of 15 hours in accordance with the following equation:

$$(I)+(II) \rightarrow$$

$$(HSiMe_2O)_2SiMe\text{-}OSiMe_2\text{-}(CH_2)_2\text{-}(SiMe_2O)_n\text{-}SiMe_2Vi$$

Three macromonomers were prepared with properties as set out in Table 1 below:

Table 1.

| Macromonomers parameters | | | | | |
|---|---|---|---|---|---|
| **Macromonomer** | ***n*** | **$M_{calk}$** | **$M_{GPC}$** | **$M_w/M_n$** | **$M_{PMR}$** |
| MM-1 | 10 | 1046 | 1120 | 1.16 | 1192 |
| MM-2 | 50 | 4006 | 4310 | 1.07 | 5480 |
| MM-3 | 100 | 7706 | 7720 | 1.03 | 7940 |

The macromonomers were analysed by IR and NMR spectroscopy and by GPC.

The samples had a narrow molecular mass distribution and a good relation between calculated and experimental data for molecular mass.

**EXAMPLE 2**

Polyaddition of macromonomer in bulk.

To 20g ($2.10^{-2}$mol) of macromonomer MM-1 in a flask under argon was added 10ml of solution of Pt-catalyst PC072 ($1.5.10^{-3}$% mass Pt) via a syringe. The reaction was followed by taking of probes for $^1H$ NMR. In 24 hours at room temperature the reaction ended. By analysis with gas permeation chromatography (GPC) a monomodal molar mass distribution was detected. After precipitation of 5% hexane solution by ethanol 80% mass of polymer was obtained with MM about 15000.

**EXAMPLE 3**

Polyaddition of macromonomer in solution.

To 30% hexane solution of macromonomer MM-2 20g ($5.10^{-3}$mol) under argon was added 10ml of solution of Pt-catalyst PC072 ($2.10^{-3}$% mass Pt) via a syringe. In 24 hours at room temperature the reaction was over by the data of $^1H$ NMR-spectra. Analysis by GPC showed a monomodal molar mass distribution with maximum of curve at a value of about 35000.

Following the procedures of Examples 2 and 3 above, further polyaddition processes were carried out with the results shown in Table 2 below:

**Table 2. Results of polyaddition processes**

| Ex | Macromonomer concentration mass % | Cat., mass % | Time of reaction h | Conversion of vinyl groups, % | Mole mass by GPC data | Intrinsic viscosity [O], dl/g | life time, h |
|---|---|---|---|---|---|---|---|
| 4 | MM-1 25 | Pt $2*10^{-3}$ | 48 | 100 | 1000 | 0,085 | -"- |
| 5 | -"- -"- | -"- | 72 | 100 | 1000 | - | -"- |
| 6 | -"- bulk | -"- | 72 | 100 | 15000 | - | -"- |
| 7 | -"- bulk | $1,5*10^{-3}$ | 24 | 100 | 15000 | - | -"- |
| 8 | -"- 33 | $1,5*10^{-3}$ | 240 | 100 | 1000 | - | -"- |
| 9 | MM-2 25 | Pt $2*10^{-3}$ | 48 | 100 | 35000 | 0,48 | ~ 200 |
| 10 | -"- 30 | $2*10^{-4}$ | 96 | 0 | - | - | - |
| 11 | -"- bulk | $2*10^{-4}$ | 72 | 100 | gel | - | - |
| 12 | -"- bulk | $2*10^{-4}$ | 24, with adding $HSiMe_3$ | 100 | 10000 | - | no gel |

| | | | | | | | | |
|---|---|---|---|---|---|---|---|---|
| 13 | -"- | 34 | $1,5*10^{-3}$ | 48 | 100 | 3500 | - | ~ 200 |
| 14 | -"- | -"- | -"- | 48, with adding $HSiMe_3$ | -"- | -"- | - | no gel |
| 15 | -"- | 30 | $2*10^{-4}$ | 72 | 100 | 12000 | 0,19 | ~ 300 |
| 16 | -"- | bulk | $1,5*10^{-3}$ | 24 | 100 | gel | - | - |
| 17 | MM-3 | bulk | Pt $2*10^{-3}$ | 24 | 100 | gel | - | - |
| 18 | -"- | bulk | $2*10^{-4}$ | 24 | 100 | gel | - | - |
| 19 | -"- | 30 | $2*10^{-3}$ | 48 | 100 | 80000 | 0,64 | ~ 100 |
| 20 | -"- | 5 | $3*10^{-3}$ | 48 | 100 | -"- | - | ~ 1000 in solution |
| 21 | -"- | 10 | -"- | 48 | 100 | -"- | - | ~ 200 |
| 22 | -"- | 25 | -"- | 48 | 100 | -"- | - | ~ 100 |
| 23 | -"- | 3 | $1,5*10^{-3}$ | 48 | 100 | 80000 | - | no gel in solution |
| 24 | -"- | 3 | $0,6*10^{-3}$ | 48 | 100 | 80000 | - | no gel in solution |
| 25 | -"- | 28 | $1,5*10^{-3}$ | 48 | 100 | -"- | - | ~ 100 |

| | | | | | | | |
|---|---|---|---|---|---|---|---|
| 26 | -"- 28 | $1,5*10^{-3}$ | 48, with adding $HSiMe_3$ | 100 | -"- | - | no gel |
| 27 | -"- 28 | $1,5*10^{-3}$ | 48, with washing by TMEDA | 100 | -"- | - | no gel |
| 28 | -"- 28 | $1,5*10^{-3}$ | 48, with washing by PEPA | 100 | -"- | - | no gel |
| 29 | -"- 30 | $3*10^{-4}$ | 48 | 100 | 70000 | 0,64 | 100 |

TMEDA is tetramethylethylenediamine

PEPA is polyethylenepolyamine

**EXAMPLE 4**

An aqueous solution was prepared by the introduction of 34.8 g (0.41 mol) sodium bicarbonate and 100 ml water into a stirrer-equipped four-neck flask. This was followed by the addition of a toluene solution of acetoxysilethylenesiloxane and 5 ml diethylamine. After heating to 40°C the reaction was stirred for 150 minutes. GLC analysis of the reaction mixture after stirring showed that the peak for the starting acetoxysilethylenesiloxane had disappeared, which indicated that the reaction was complete. The reaction mixture was subjected to separatory extraction, washing with water, and distillation of the solvent to give 79.5 g reaction product. The compound thus obtained was confirmed by GLC analysis to be the siloxanol compound with the following formula in a purity of 98.0% (yield = 96.3%).

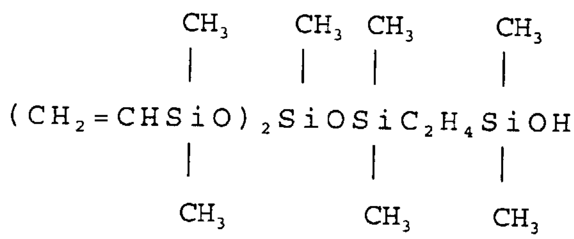

307.8 g (1.4 mol) hexamethylcyclotrisiloxane and 350 ml toluene were placed in a stirrer-equipped four-neck flask and heated in order to carry out azeotropic drying. 168.7 g (0.40 mol) of the siloxanol compound prepared above were placed in a separate stirrer-equipped four-neck flask, and, while cooling this reaction system with ice water, 3.0 ml (5.0 mmol) of a 1.68 mol/l n-hexane solution of n-butyllithium was added while stirring. A previously dried toluene solution of hexamethylcyclotrisiloxane was added to this reaction system followed by the addition of 20.0 g acetonitrile and 20.0 g dimethylformamide. The reaction system was then stirred for 190 minutes at 30°C. GLC analysis of the reaction mixture after stirring gave a hexamethylcyclotrisiloxane conversion of 81%, on the basis of which the reaction was regarded as finished. The reaction was subsequently stopped by the addition of 41.5 g (0.57 mol) diethylamine and then 47.3 g (0.50 mol) dimethylchlorosilane. After stirring overnight at room temperature, 30 mL methanol was added followed by stirring for an additional 60 minutes. The solvent was then distilled off and the precipitated salt by-product was removed by sterilizing filtration to give 433.1 g polymer. This polymer was confirmed by NMR to be the organopolysiloxane-type polymer with the following formula (yield = 98.0%).

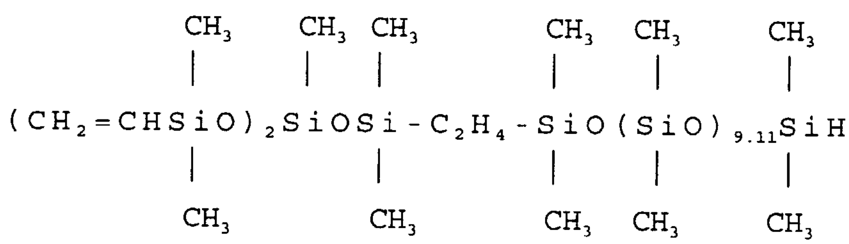

**EXAMPLE 5**

Example 4 was repeated, using 300.9 g (1.4 mol) hexamethylcyclotrisiloxane, stirring the reaction for 300 minutes at 30°C. GLC analysis of the reaction mixture after stirring gave a hexamethylcyclotrisiloxane conversion of 81%, on the basis of which the reaction was regarded as finished. The reaction was subsequently stopped by the addition of 7.8 g (0.11 mol) diethylamine and then 9.5 g (0.10 mol) dimethylchlorosilane. After stirring overnight at room temperature, 20 mL methanol was added followed by stirring for an additional 60 minutes. The solvent was then distilled off and the precipitated salt by-product was removed by sterilizing filtration to give 255.6 g polymer. This polymer was confirmed by NMR to be the organopolysiloxane-type polymer with the following formula (yield = 92.0%).

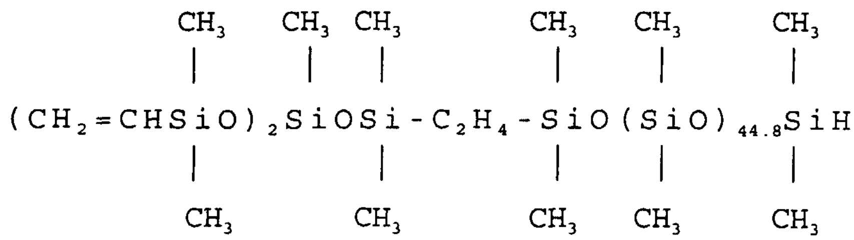

## EXAMPLE 6

Example 4 was repeated with 297.2 g (1.3 mol) hexamethylcyclotrisiloxane, 17.0 g (40 mmol) of the siloxanol compound prepared in Example 4, 0.3 ml (0.5 mmol) of a 1.68 mol/l n-hexane solution of n-butyllithium was added while stirring, stirring the reaction for 180 minutes at 30°C. The reaction was stopped by the addition of 3.7 g (51 mmol) diethylamine and then 4.7 g (0.50 mol) dimethylchlorosilane. The solvent was distilled off and the precipitated salt by-product was removed by sterilizing filtration to give 255.6 g polymer. This polymer was confirmed by NMR to be the organopolysiloxane-type polymer with the following formula (yield = 95.4%).

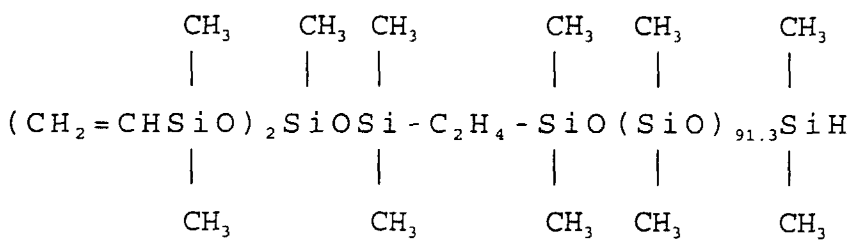

## Claims

**1.** A macromonomer of the general formula $A_x$ L $B_y$ in which

A is an alkenyl-containing or alkynyl-containing group;
B is an SiH-containing group of the formula $-OSiR_2H$; one of x and y is 1, and the other is 2 or 3;
L is a spacer group which includes a polysiloxane moiety of the formula $(R_2SiO)_n$;
each R independently is an alkyl, haloalkyl or aryl group; and
n is an integer of at least 3.

**2.** A macromonomer according to Claim 1, in which A is a lower alkenyl or alkynyl group containing from 2 to 6 carbon atoms.

**3.** A macromonomer according to Claim 1 or 2, in which x is 1 and y is 2 or 3.

**4.** A macromonomer according to any of Claims 1 to 3, in which the spacer group L is a copolymer of siloxane and carbon chains.

**5.** A macromonomer according to any of Claims 1 to 4, which is of the general formula:

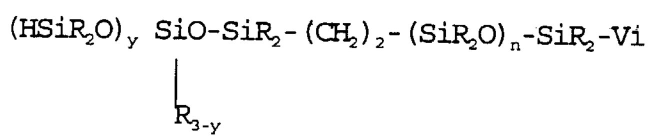

where y is 2 or 3, and Vi is vinyl.

**6.** A macromonomer according to Claim 4, which is of the formula

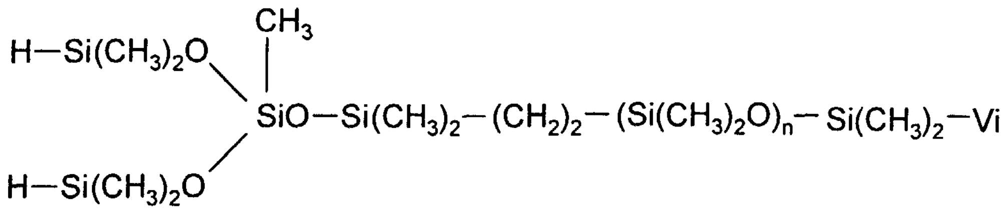

**7.** A method of preparing a macromonomer according to any of Claims 1 to 6, which comprises reacting a compound of the formula $A_xL^1P$ with a compound of the formula $QL^2B_y$, in which one of P and Q is a halogen and the other of P and Q is an alkali metal, and $L^1$ and $L^2$ are spacer groups, at least one of which includes a polysiloxane moiety of unit formula $R_2SiO$.

**8.** A method according to Claim 7, in which the halogen is chlorine and the alkali metal is lithium.

**9.** A method according to Claim 7, in which
$Li(OSiR_2)_n$-Vi is reacted with
$(HSiR_2O)_2$ Si(R)O-$SiR_2$-$(CH_2)_2$-$SiR_2Cl$, which is formed by reacting $(HSiR_2O)_3SiR$ with $ViSiR_2Cl$ in the presence of a Group VIII metal catalyst.

**10.** A method according to Claim 9, in which the compound $Li(OSiR_2)_n$-Vi is formed by reacting $ViSiR_2OLi$ with $[R_2SiO]_3$ in proportions predetermined to obtain the desired value of n.

**11.** A method of forming a hyperbranched polymer, which comprises contacting a macromonomer according to any of Claims 1 to 6 with a catalyst comprising a Group VIII metal.

**12.** A method according to Claim 11, in which the polymer is stabilised by addition of a volatile Si-H containing compound, selected from trimethylsilane and tetramethyldisiloxane.

**13.** A method according to Claim 11, in which the polymer is stabilised by extracting Group VIII metal-containing compounds using an immiscible nitrogen-containing polar solvent, selected from tetramethylethylenediamine, polyethylenepolyamine and acetonitrile.